# EUROPÄISCHE PATENTSCHRIFT

(11) **EP 3 014 239 B1**
(45) Veröffentlichungstag und Bekanntmachung des Hinweises auf die Patenterteilung: **10.04.2019**
(21) Anmeldenummer: 14723428.0
(22) Anmeldetag: 12.05.2014
(51) Int. Cl.: G01M 11/06

(54) **VERFAHREN ZUM ÜBERPRÜFEN DER EINSTELLUNG EINES SCHEINWERFERS IN EINEM KRAFTFAHRZEUG**
METHOD FOR CHECKING THE ADJUSTMENT OF A HEADLAMP IN A MOTOR VEHICLE
PROCÉDÉ DE CONTRÔLE DU RÉGLAGE D'UN PHARE DE VÉHICULE AUTOMOBILE

(30) Priorität: 24.06.2013 DE 102013211876
(43) Veröffentlichungstag der Anmeldung: 04.05.2016
(73) Patentinhaber: Bayerische Motoren Werke Aktiengesellschaft, 80809 München (DE)
(72) Erfinder: STRIEGLER, Arne, 81476 München (DE)
(86) Internationale Anmeldenummer: PCT/EP2014/059624
(87) Internationale Veröffentlichungsnummer: WO 2014/206624

(56) Entgegenhaltungen:
- EP-A1- 2 128 590
- EP-A1- 2 562 042
- EP-A2- 1 964 717
- EP-A2- 2 485 032
- DE-A1- 19 932 294
- DE-A1-102008 002 026
- DE-A1-102010 049 047
- DE-A1-102011 017 697

## Beschreibung

Die Erfindung betrifft ein Verfahren zum Überprüfen der Einstellung eines Scheinwerfers in einem Kraftfahrzeug sowie eine entsprechende Vorrichtung und ein entsprechendes Kraftfahrzeug.

Aus dem Stand der Technik sind verschiedene Verfahren zur Überprüfung der Einstellung von Scheinwerfern eines Kraftfahrzeugs bekannt. In dem Dokument EP 2 485 032 A2 wird ein Verfahren zur Justierung einer Grundeinstellung eines Kraftfahrzeug-Scheinwerfers beschrieben, bei dem die Position einer Hell-Dunkel-Grenze der Lichtverteilung des Scheinwerfers auf einer Messfläche für unterschiedliche Schwenkwinkel des Scheinwerfer-Lichtbündels erfasst wird und basierend darauf ein Korrekturwinkel zum Justieren der Grundeinstellung des Scheinwerfers bestimmt wird.

In dem Dokument EP 2 128 590 A1 ist ein Verfahren zur Kalibrierung einer durch einen Frontscheinwerfer eines Fahrzeugs erzeugten horizontalen Hell-Dunkel-Grenze offenbart. Dabei wird die Hell-Dunkel-Grenze mit einer Kamera des Fahrzeugs erfasst und aus den Bilddaten eine Abweichung der Ist-Position von einer Soll-Position der Hell-Dunkel-Grenze ermittelt.

Die aus dem Stand der Technik bekannten Verfahren weisen den Nachteil auf, dass zur Überprüfung der Scheinwerfereinstellung die entsprechende Lichtverteilung des Scheinwerfers immer auf eine planare Projektionsfläche projiziert werden muss. Die Verfahren können somit nicht für beliebig geformte bzw. ausgerichtete Projektionsflächen verwendet werden.

In dem Dokument DE 10 2010 049 047 A1 ist ein Verfahren zur Überprüfung eines lichttechnischen Fahrassistenzsystems offenbart, bei dem Scheinwerfer eines Fahrzeugs vor einer planen Oberfläche einen Schwenkbereich durchfahren und dabei eine Vielzahl von Positionen mittels einer Bilderfassungseinheit erfasst wird. Anhand der Erkennung charakteristischer Punkte der Helligkeitsverteilung wird eine Differenz zwischen Soll- und IstWerten der Winkelpositionen der Scheinwerfer ermittelt.

Das Dokument DE 10 2011 017 697 A1 offenbart ein Verfahren zur Leuchtweitenregulierung eines Scheinwerfers, wobei eine Kamera ein Bild eines Lichtkegels des Scheinwerfers auf einer Projektionsfläche aufnimmt. In dem aufgenommenen Bild werden die Koordinaten eines vordefinierten Helligkeitsübe rgangs überprüft und daraus wird eine Differenz zwischen Soll- und Ist-Position der Koordinaten des Übergangs ermittelt. Auf Basis dieser Differenz wird die Leuchtweite geändert.

In dem Dokument EP 1 964 717 A2 wird ein Verfahren zur Steuerung einer Lichtabgabe eines Fahrzeugs in Abhängigkeit eines Fahrbahn verlaufs offenbart. Der vertikale Verlauf der Fahrbahn wird unter anderem kamerabasiert bestimmt und die Lichtabgabe des Fahrzeugs daran angepasst.

Das Dokument EP 2 562 042 A2 offenbart ein Verfahren zur Bestimmung einer Leuchtweite und zur Kalibrierung einer Lichtaussendung eines Scheinwerfers eines Fahrzeugs. Dabei werden angestrahlte Fahrbahnmarkierungsmerkmale, beispielsweise Leitpfosten, kamerabasiert erkannt und ein Abstand zu diesen ermittelt. Basierend darauf wird die Leuchtweite des Fahrzeugs bestimmt.

In dem Dokument DE 199 32 294 A1 wird ein Verfahren zur Einstellung eines Scheinwerfers offenbart, bei dem ein Fahrzeug vor einer Projektionsfläche in einer definierten Position aufgestellt wird, auf der Projektionsfläche eine dem Fahrzeug zugeordnete Soll-Position des Lichtkegels des Scheinwerfers angezeigt wird und anschließend die Ist-Position des Lichtkegels an die angezeigte Soll-Position angepasst wird.

Aufgabe der Erfindung ist es, ein Verfahren bzw. eine Vorrichtung zu schaffen, mit denen flexibel mit unterschiedlichen Projektionsflächen die Einstellung des Scheinwerfers eines Kraftfahrzeugs überprüft werden kann.

Diese Aufgabe wird durch das Verfahren gemäß Patentanspruch 1 bzw. die Vorrichtung gemäß Patentanspruch 13 gelöst. Weiterbildungen der Erfindung sind in den abhängigen Ansprüchen definiert.

In dem erfindungsgemäßen Verfahren wird in einem Schritt a) in einer vorgegebenen Grundposition des Scheinwerfers mittels einer Bildaufnahmeeinrichtung des Kraftfahrzeugs eine auf den Scheinwerfer zuweisende Projektionsfläche zu einem oder mehreren Aufnahmezeitpunkten umfassend einen Aufnahmezeitpunkt mit aktiviertem Scheinwerfer erfasst. Die vorgegebene Grundposition kann eine einzelne, fest eingestellte Scheinwerferposition sein, sofern das Kraftfahrzeug nicht über eine z.B. vom Beladungszustand abhängige Scheinwerferverstellung verfügt. Ansonsten ist die Grundposition vorzugsweise die Position des Scheinwerfers in einem Zustand, in dem das Fahrzeug nicht beladen ist. Gemäß Schritt a) werden Bilddaten mit räumlichen Positionsinformationen erhalten, wobei die Bilddaten die Projektionsfläche enthalten. Mit anderen Worten ist die Bildaufnahmeeinrichtung derart ausgestaltet, dass sie dreidimensionale räumliche Positionsinformationen über die Umgebung des Kraftfahrzeugs ermittelt. Hier und im Folgenden sind unter Positionen, insbesondere der nachfolgend beschriebenen Ist- bzw. Soll-Position bzw. dem vorgegebenen Strahlengang, dreidimensionale Positionsdaten zu verstehen.

In einer besonders bevorzugten Ausführungsform ist die Bildaufnahmeeinrichtung eine 3D-Kamera, wie z.B. eine Stereokamera oder eine TOF-Kamera (TOF = Time Of Flight). Solche Kameras werden heutzutage oftmals standardmäßig in Kraftfahrzeugen verbaut und können somit zur Durchführung des erfindungsgemäßen Verfahrens genutzt werden. Gegebenenfalls kann die Bildaufnahmeeinrichtung auch Teil eines Muster-Projektionssystems sein, bei dem ein definiertes Muster auf die Projektionsfläche projiziert und aufgenommen wird. Anhand der sich aus den aufgenommenen Bildern ergebenden Verzerrungen des Musters werden dreidimensionale Abstandsinformationen ermittelt. In einem solchen Muster-Projektionssystem kann eine separate Leuchtquelle zur Generierung des Musters verwendet werden. Nichtsdestotrotz kann das Muster auch durch den Scheinwerfer selbst erzeugt werden. Hierzu können so genannte Matrixbeams (auch Pixellicht genannt) genutzt werden, mit denen definierte Muster auf eine Fläche vor dem Fahrzeug projiziert werden können.

In einem Schritt b) des erfindungsgemäßen Verfahrens wird aus den in Schritt a) erhaltenen Bilddaten ein 3D-Modell der Projektionsfläche ermittelt, welches die Projektionsfläche in einem Bezugssystem des Kraftfahrzeugs basierend auf einer Vielzahl von Positionen auf der Oberfläche der Projektionsfläche beschreibt. Die Erstellung entsprechender 3D-Modelle mittels dreidimensionaler Bilddaten ist dabei an sich aus dem Stand der Technik bekannt und wird deshalb nicht im Detail erläutert. Ein Beispiel eines Verfahrens zur Bildung eines 3D-Modells ist in der Druckschrift Ahlvers, U., Zölzer, U.: 3D-Auswertung von Stereobildern, Uniforschung Helmut Schmidt Universität, Hamburg, Ausgabe 2005, Jahrgang 15, beschrieben. Unter dem obigen Begriff des Bezugssystems des Kraftfahrzeugs ist ein im Kraftfahrzeug ortsfestes Bezugssystem zu verstehen, welches sich bei der Veränderung der Position des Kraftfahrzeugs mitbewegt. Vorzugsweise ist das Bezugssystem des Kraftfahrzeugs durch ein Koordinatensystem am Verbauort der Bildaufnahmeeinrichtung gegeben.

In einem Schritt c) des erfindungsgemäßen Verfahrens wird aus den über die Bildaufnahmeeinrichtung erfassten Bilddaten eine Ist-Position eines Lichtbereichs innerhalb der Lichtverteilung des Scheinwerfers auf der Projektionsfläche in dem Bezugssystem des Kraftfahrzeugs identifiziert, wobei der Lichtbereich durch einen für die Grundposition des Scheinwerfers vorgegebenen Strahlengang im Licht des Scheinwerfers in dem Bezugssystem des Kraftfahrzeugs charakterisiert ist. Der Begriff des Lichtbereichs ist dabei weit zu verstehen und kann eine beliebige charakteristische Struktur, wie z.B. eine Hell-Dunkel-Grenze, oder auch einen vorbestimmten Lichtpunkt (z.B. den Ort mit der höchsten Helligkeit) umfassen. Zur Identifikation des Lichtbereichs können an sich bekannte Mustererkennungs-Algorithmen eingesetzt werden.

In einem Schritt d) des erfindungsgemäßen Verfahrens wird basierend auf dem vorgegebenen Strahlengang und dem 3D-Modell der Projektionsfläche eine Soll-Position des Lichtbereichs innerhalb der Lichtverteilung des Scheinwerfers auf der Projektionsfläche in dem Bezugssystem des Kraftfahrzeugs ermittelt. Diese Ermittlung kann in einfacher Weise z.B. dadurch geschehen, dass die Durchstoßpunkte von Strahlen des Strahlengangs durch die über das 3D-Modell beschriebene Projektionsfläche in an sich bekannter Weise bestimmt werden.

Schließlich wird in einem Schritt e) eine Verstellung (d.h. eine nicht korrekte Einstellung) des Scheinwerfers festgestellt, falls die (betragsmäßige) Abweichung zwischen der Ist-Position und der Soll-Position des Lichtbereichs einen vorgegebenen Schwellwert überschreitet.

Das erfindungsgemäße Verfahren weist den Vorteil auf, dass zur Überprüfung des Scheinwerfers beliebige Projektionsflächen verwendet werden können, denn im Rahmen des Verfahrens wird ein 3D-Modell der Projektionsflächen erstellt. Mit anderen Worten wird die Projektionsfläche während des Verfahrens mit vermessen. Das Verfahren kann dabei sehr schnell durchgeführt werden. In einer bevorzugten Variante sind alle Komponenten zur Durchführung des Verfahrens in dem Kraftfahrzeug selbst integriert, so dass z.B. bei jeder Aktivierung eines Scheinwerfers überprüft werden kann, ob dieser korrekt eingestellt ist. Das Verfahren kann für beliebige Arten von Kraftfahrzeug-Scheinwerfern zum Einsatz kommen. Insbesondere kann damit die Einstellung eines Frontscheinwerfers des Kraftfahrzeugs, wie z.B. eines Abblendlichtscheinwerfers oder eines Fernlichtscheinwerfers oder eines Nebelscheinwerfers, überprüft werden.

In einer besonders bevorzugten Ausführungsform des erfindungsgemäßen Verfahrens wird die Projektionsfläche in Schritt a) zu einem einzelnen Aufnahmezeitpunkt bei aktiviertem Scheinwerfer erfasst, wodurch das Verfahren sehr schnell durchgeführt werden kann. Nichtsdestotrotz besteht gegebenenfalls die Möglichkeit, dass die Projektionsfläche zur Erstellung des 3D-Modells bei nicht aktiviertem Scheinwerfer bzw. bei Aktivierung eines speziellen Leuchtmittels erfasst wird und separat nochmals die Lichtverteilung bei aktiviertem Scheinwerfer auf der Projektionsfläche aufgenommen wird. Wie bereits oben erwähnt, kann der Lichtbereich in der Lichtverteilung des Scheinwerfers auf der Projektionsfläche verschieden definiert sein. Insbesondere kann der Lichtbereich dabei den Ort mit der höchsten Lichtintensität darstellen.

In einer weiteren Ausgestaltung des erfindungsgemäßen Verfahrens wird eine Warnmeldung ausgegeben, falls in Schritt e) eine Verstellung des Scheinwerfers festgestellt wird. Vorzugsweise ist diese Warnmeldung eine durch das Kraftfahrzeug ausgegebene Warnmeldung, welche durch den Fahrer des Fahrzeugs wahrgenommen werden kann. Die Warnmeldung ist insbesondere eine visuelle und/oder akustische und/oder haptische Meldung. Auf diese Weise wird der Fahrer unmittelbar über einen verstellten Scheinwerfer informiert, so dass er eine Neujustierung des Scheinwerfers veranlassen kann.

In einer besonders bevorzugten Ausführungsform umfasst das Kraftfahrzeug eine automatische Justiereinrichtung zur Justage der Position des Scheinwerfers im Kraftfahrzeug, wobei in einem Schritt f) die automatische Justiereinrichtung die Position des Scheinwerfers um die Abweichung zwischen der Ist-Position und der Soll-Position korrigiert, falls die Abweichung den vorgegebenen Schwellwert überschreitet. Auf diese Weise kann durch das Fahrzeug selbst unmittelbar bei Feststellung einer Verstellung eine Korrektur der Scheinwerfereinstellung vorgenommen werden.

In einer weiteren Ausführungsform des erfindungsgemäßen Verfahrens wird nach der Korrektur der Position des Scheinwerfers um die Abweichung zwischen der Ist-Position und der Soll-Position die korrigierte Position des Scheinwerfers als neue vorgegebene Grundposition im Kraftfahrzeug gespeichert, wobei die oben beschriebenen Schritte a) bis f) vorzugsweise solange wiederholt werden, bis die Abweichung zwischen der Ist-Position und der Soll-Position in Schritt e) kleiner oder gleich dem vorgegebenen Schwellwert ist. Auf diese Weise wird eine sehr zuverlässige Einstellung der neuen Grundposition gewährleistet.

Gegebenenfalls muss der Scheinwerfer bei der Durchführung des Verfahrens nicht in seinem Normalbetriebszustand geschaltet werden. Vielmehr kann der Scheinwerfer zu dem oder den Aufnahmezeitpunkten in Schritt a) auch nur kurz aufblitzen.

In einer weiteren Ausgestaltung des erfindungsgemäßen Verfahrens wird in Schritt b) ein Maß für die Genauigkeit des 3D-Modells ermittelt. Die Bestimmung entsprechender Maße ist an sich bekannt bzw. liegt im Rahmen von fachmännischem Handeln. Zum Beispiel kann das Maß für die Genauigkeit umso kleiner werden, je größer benachbarte Oberflächenpositionen auf der Projektionsfläche gemäß dem 3D-Modell voneinander abweichen. Das Verfahren wird abgebrochen oder es wird eine Warnmeldung ausgegeben, wenn das Maß für die Genauigkeit des 3D-Modells unterhalb einer vorbestimmten Schwelle liegt. Auf diese Weise wird berücksichtigt, dass unter bestimmten Umständen die Eigenschaften der Projektionsfläche zur Durchführung des Verfahrens nicht geeignet sind.

In einer weiteren Variante wird aus den in Schritt a) erhaltenen Bilddaten die Umgebungshelligkeit ermittelt, wobei das Verfahren abgebrochen wird oder eine Warnmeldung ausgegeben wird, wenn die Umgebungshelligkeit einen vorbestimmten Helligkeitswert überschreitet. Hierdurch wird berücksichtigt, dass bei zu heller Umgebung eine ordnungsgemäße Durchführung des Verfahrens und insbesondere die Bestimmung der Ist-Position des entsprechenden Lichtbereichs nicht mehr gewährleistet sind.

In einer weiteren Ausgestaltung des erfindungsgemäßen Verfahrens wird aus den Bilddaten eine Position eines Bauteils des Fahrzeugs, insbesondere eine Position im Frontbereich des Fahrzeugs, wie z.B. die Motorhaube, extrahiert. Basierend auf dieser Information wird dann das Bezugssystem des Kraftfahrzeugs in den Bilddaten identifiziert. Hierdurch wird die korrekte Lage des Bezugssystems in den Bilddaten sichergestellt.

Neben dem oben beschriebenen Verfahren betrifft die Erfindung ferner eine Vorrichtung zum Überprüfen der Einstellung eines Scheinwerfers in einem Kraftfahrzeug, wobei die Vorrichtung eine Rechnereinrichtung umfasst, welche derart ausgestaltet ist, dass mit der Rechnereinrichtung in deren Betrieb das erfindungsgemäße Verfahren bzw. eine oder mehrere bevorzugte Varianten des erfindungsgemäßen Verfahrens durchführbar sind. Die Rechnereinrichtung kann durch eine oder mehrere Einheiten realisiert sein, z.B. kann die Rechnereinrichtung das weiter unten beschriebene Lichtsteuergerät in Kombination mit der Auswerteeinheit darstellen.

In einer besonders bevorzugten Ausführungsform sind die Komponenten der erfindungsgemäßen Vorrichtung Teil des Kraftfahrzeugs selbst. Das heißt, die Erfindung umfasst auch ein Kraftfahrzeug, welches die erfindungsgemäße Vorrichtung zur Überprüfung eines Scheinwerfers des Kraftfahrzeugs umfasst.

Ausführungsbeispiele der Erfindung werden nachfolgend anhand der beigefügten Figuren detailliert beschrieben.

Es zeigen:
- Fig. 1: eine perspektivische Darstellung eines Kraftfahrzeugs und einer Projektionsfläche, anhand der eine Ausführungsform des erfindungsgemäßen Verfahrens erläutert wird; und
- Fig. 2: eine schematische Darstellung der Komponenten in einem Kraftfahrzeug, welche zur Durchführung des erfindungsgemäßen Verfahrens benötigt werden.

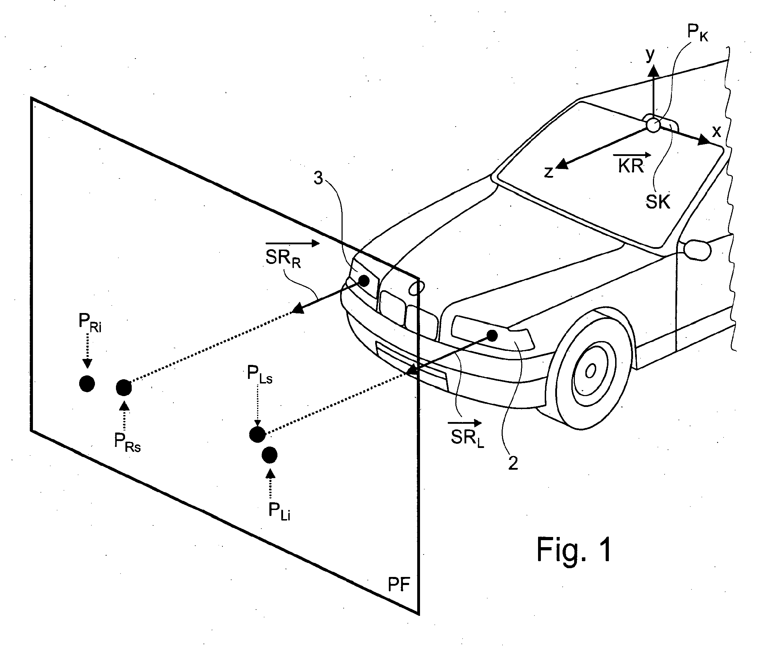

Nachfolgend wird eine Ausführungsform des erfindungsgemäßen Verfahrens erläutert, bei der die Überprüfung der Scheinwerfereinstellung eines Kraftfahrzeugs durch das Kraftfahrzeug selbst vorgenommen wird. Das heißt, alle zur Überprüfung der Scheinwerfereinstellung benötigten Komponenten sind im Kraftfahrzeug verbaut. Fig. 1 zeigt in perspektivischer Darstellung den vorderen Teil eines Kraftfahrzeugs 1 mit den beiden Frontscheinwerfern 2 und 3, deren Einstellung überprüft werden soll. Wie weiter unten näher erläutert, kann bei einer Verstellung der Scheinwerfer auch eine automatische Justierung derselben durch eine Justiereinrichtung vorgenommen werden. Im Folgenden wird die Überprüfung der Einstellung des Abblendlichts der Scheinwerfer 2 und 3 erläutert, wobei das Verfahren analog auch zur Überprüfung der Fernlichteinstellung bei Aktivierung des Fernlichts sowie gegebenenfalls auch für andere Scheinwerfer, wie z.B. Nebelscheinwerfer, eingesetzt werden kann.

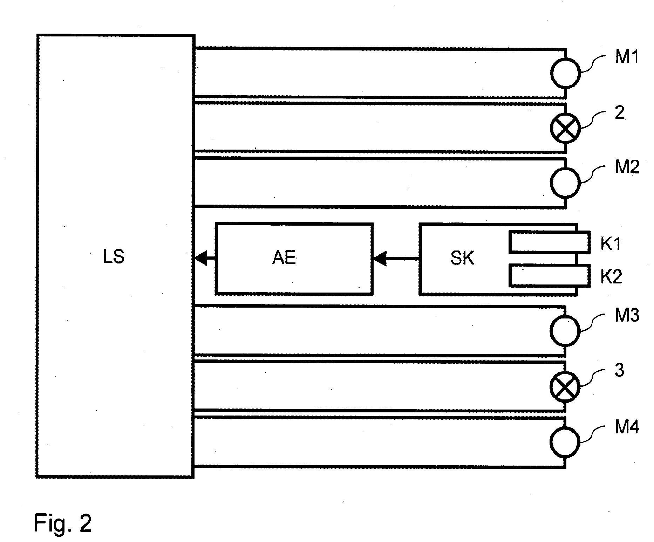

Bei der Durchführung des Verfahrens werden die schematisch in Fig. 2 dargestellten Komponenten im Kraftfahrzeug verwendet. Die beiden Scheinwerfer sind in Fig. 2 analog zu Fig. 1 mit den Bezugszeichen 2 und 3 bezeichnet und mit einem Lichtsteuergerät LS verbunden. Der linke Scheinwerfer 2 kann dabei über Motoren M1 und M2 in seiner Position verändert werden, wobei der Motor M1 den Scheinwerfer in vertikaler Richtung und der Motor M2 den Scheinwerfer in horizontaler Richtung bewegt. Analog sind Motoren M3 und M4 zur Einstellung der Position des Scheinwerfers 3 vorgesehen, wobei der Motor M3 den Scheinwerfer in vertikaler Richtung und der Motor M4 den Scheinwerfer in horizontaler Richtung bewegt. Die Motoren M1, M2 bzw. M3, M4 stellen jeweils eine automatische Justiereinrichtung für den entsprechenden Scheinwerfer 2 bzw. 3 dar. In dem Fahrzeug 1 ist ferner eine 3D-Kamera in der Form einer Stereokamera SK verbaut, welche an der vorderen Kante des Dachs des Fahrzeugs an der Position P_{K} angeordnet ist (siehe Fig. 1). Die Stereokamera umfasst die beiden Kameras K1 und K2, welche den Bereich vor dem Fahrzeug aus verschiedenen Blinkwinkeln aufnehmen und hierdurch ein Stereobild und somit dreidimensionale räumliche Informationen als Bilddaten erfassen. Die Stereokamera SK ist mit einer Auswerteeinheit AE im Fahrzeug verbunden, bei der es sich um eine Rechnereinheit handelt, welche wiederum eine Verbindung zu dem Lichtsteuergerät LS aufweist. Gegebenenfalls können das Lichtsteuergerät LS und die Auswerteeinheit AE auch ineinander integriert sein und eine gemeinsame Steuer- und Auswerteeinheit bilden.

Zur Überprüfung der Scheinwerfer wird durch den Fahrer bzw. das Fahrzeug die Scheinwerferjustierung gestartet, z.B. indem ein entsprechender Bedienbefehl über eine Benutzerschnittstelle durch den Fahrer eingegeben wird. Anschließend fährt das Lichtsteuergerät LS die Scheinwerfer 2 und 3 in eine aktuelle Grundposition, welche die Position des Scheinwerfers ohne eine Anpassung aufgrund erhöhten Beladungszustands des Fahrzeugs ist. Anschließend aktiviert das Steuergerät LS die Scheinwerferleuchtmittel der Scheinwerfer 2 und 3 zur Generierung der Abblendlichtverteilung. Zeitgleich nehmen die Kameras K1 und K2 der Stereokamera SK ein Bild auf, welches an die Auswerteeinheit AE gesendet wird. Für die Stereokamera ist dabei eine in der Auswerteeinheit hinterlegte Blickrichtung *̅K̅R̅*̅ festgelegt, welche im Wesentlichen der Längsrichtung des Fahrzeugs 1 entspricht. Über die Blickrichtung ist auch ein Bezugssystem des Fahrzeugs in der Form des in Fig. 1 gezeigten Koordinatensystems mit Ursprung in der Position P_{K} und den orthogonalen Achsen x, y und z gegeben. Die z-Achse entspricht dabei der Blickrichtung *̅K̅R̅*̅ der Stereokamera SK. Dieses Bezugssystem ist ortsfest in dem Kraftfahrzeug, d.h. es bewegt sich bei Veränderung der Position des Kraftfahrzeugs mit diesem mit.

Gemäß Fig. 1 sind ferner für das Abblendlicht der beiden Scheinwerfer jeweils Strahlrichtungen *̅S̅R̅_̅{̅L̅}̅*̅ für den Scheinwerfer 2 und *̅S̅R̅_̅{̅R̅}̅*̅ für den Scheinwerfer 3 festgelegt. In der hier beschriebenen Ausführungsform weisen die entsprechenden Strahlen bei korrekter Einstellung der Scheinwerfer auf den Punkt in der Lichtverteilung des jeweiligen Scheinwerfers mit der höchsten Intensität. Die beiden Strahlrichtungen sind in der Auswerteeinheit AE in Bezug auf das oben beschriebene Bezugssystem des Kraftfahrzeugs abgespeichert. In Fig. 1 ist ferner eine Projektionsfläche PF vor dem Fahrzeug gezeigt, bei der es sich um ein beliebiges Objekt mit flächiger Struktur handeln kann, denn das erfindungsgemäße Verfahren kann zur Justierung der Scheinwerfer beliebig geformte Projektionsflächen PF verwenden. Der Punkt mit der höchsten Lichtintensität in der Abblendlichtverteilung bei korrekter Justage des Scheinwerfers 2 auf der Projektionsfläche PF ist dabei mit P_{Ls} bezeichnet und stellt die Soll-Position des Punkts mit der höchsten Intensität für die Abblendlichtverteilung des Scheinwerfers 2 dar. Analog stellt die Position P_{Rs} die entsprechende Soll-Position für den Punkt mit der höchsten Intensität gemäß der von dem Scheinwerfer 3 generierten Abblendlichtverteilung dar. Die Positionen mit der höchsten Helligkeit entsprechen in der Regel der Mitte, der durch die jeweiligen Scheinwerfer generierten Lichtkegel. In dem Szenario der Fig. 1 sind die Scheinwerfer 2 und 3 verstellt, so dass die Ist-Position P_{Li} des Punkts mit der höchsten Helligkeit für den Scheinwerfer 2 und analog die Ist-Position P_{Ri} für den Punkt mit der höchsten Helligkeit für den Scheinwerfer 3 von den entsprechenden Soll-Positionen P_{Rs} bzw. P_{Ls} abweichen.

Wie oben beschrieben, werden die von der Stereokamera SK erfassten Bilder an die Auswerteeinheit AE übermittelt. Diese Auswerteeinheit berechnet dann mit an sich bekannten Algorithmen ein 3D-Modell der Oberfläche der Projektionsfläche PF. Dieses 3D-Modell enthält eine Vielzahl von auf der Oberfläche identifizierten Positionen mit dreidimensionalen räumlichen Koordinaten, wobei diese Koordinaten wiederum in dem Bezugssystem des Fahrzeugs angegeben sind. Anschließend werden durch die Auswerteeinheit AE die Ist-Positionen P_{Li} und P_{Ri} in der Lichtverteilung des Scheinwerfers ermittelt. Hierfür können an sich bekannte Mustererkennungs-Algorithmen eingesetzt werden.

In einem nächsten Schritt berechnet die Auswerteeinheit AE die Soll-Positionen P_{Ls} und P_{Rs}, indem unter Verwendung des 3D-Modells der Projektionsfläche PF die Durchstoßpunkte der entsprechenden Vektoren *̅S̅R̅_̅{̅L̅}̅*̅ und *̅S̅R̅_̅{̅R̅}̅*̅ durch die Projektionsfläche ermittelt werden. Anschließend bestimmt die Auswerteeinheit AE den (betragsmäßigen) Unterschied zwischen der Soll-Position P_{Ls} und der Ist-Position P_{Li} sowie analog den (betragsmäßigen) Unterschied zwischen der Soll-Position P_{Rs} und der Ist-Position P_{Ri}. In der Auswerteeinheit ist dabei ein Schwellwert vorgegeben, der ein Toleranzmaß für die Einstellung der Scheinwerfer beschreibt. Sollte zumindest eine der ermittelten Abweichungen größer als der Schwellwert sein, wird in der Auswerteeinheit AE eine Verstellung (d.h. nicht korrekte Einstellung) der Scheinwerfer festgestellt. Im Falle einer solchen Verstellung berechnet die Auswerteeinheit AE aus den obigen Abweichungen zwischen Soll-Position und Ist-Position entsprechende horizontale und vertikale Verstellwinkel der Scheinwerfer 2 und 3.

Diese Verstellwinkel werden von der Auswerteeinheit AE an das Lichtsteuergerät LS gegeben, welche die aktuelle Grundposition basierend auf diesen Winkeln korrigiert. Basierend auf dieser korrigierten Grundposition werden dann mittels der oben beschriebenen Motoren M1 bis M4 die Scheinwerfer über das Lichtsteuergerät LS neu justiert, so dass die Ist-Positionen wieder mit den Soll-Positionen übereinstimmen. Nach der Justage kann gegebenenfalls nochmals eine Überprüfung der Scheinwerfer beginnend mit der Aufnahme von neuen Bildern durch die Stereokamera SK durchgeführt werden, um sicherzustellen, dass die Neujustierung auch tatsächlich dazu geführt hat, dass die Ist-Positionen den Soll-Positionen entsprechen. Gegebenenfalls kann die Justierung dabei nochmals angepasst werden. Wird schließlich keine Abweichung zwischen den Ist-Positionen und Soll-Positionen mehr festgestellt, wird die aktuelle Position der Scheinwerfer als neue Grundposition in dem Lichtsteuergerät dauerhaft gespeichert.

Für die oben beschriebene Ausführungsform des erfindungsgemäßen Verfahrens sind verschiedene Variationen möglich. Insbesondere müssen die Scheinwerfer bei der Bildaufnahme durch die Stereokamera nicht in ihren normalen Betriebszustand geschaltet werden, sondern sie können hierzu nur kurz aufblitzen. Auch muss sich an die Überprüfung der Scheinwerfer keine automatische Scheinwerferjustierung anschließen, d.h. das Verfahren kann auch in einem Fahrzeug ohne automatische Justiereinrichtung verwendet werden. In diesem Fall wird immer dann, wenn durch die Auswerteeinheit eine Verstellung des Scheinwerfers festgestellt wird, eine entsprechende Warnmeldung ausgegeben, mit der der Fahrer darüber informiert wird, dass die Scheinwerfer verstellt sind und ein entsprechender Service durchgeführt werden sollte.

Gegebenenfalls kann die Auswerteeinheit auch Eigenschaften der Projektionsfläche PF ermitteln. Wird beispielsweise festgestellt, dass die Projektionsfläche zerklüftet ist (d.h. es bestehen starke Unterschiede zwischen benachbarten Oberflächenkoordinaten), wird der Fahrer mittels einer Benutzerschnittstelle darüber informiert, dass die Projektionsfläche nicht geeignet ist, um die Einstellung der Scheinwerfer zu überprüfen und eine verlässliche Justierung der Scheinwerfer vorzunehmen.

Ferner kann die Auswerteeinheit durch Auswertung der Kamerabilder auch die Umgebungshelligkeit ermitteln. Falls diese zu hoch ist, kann der Fahrer über eine entsprechende Benutzerschnittstelle informiert werden, dass die Umgebungshelligkeit für eine verlässliche Überprüfung bzw. Justierung des Scheinwerfers zu hoch ist. Man macht sich hierbei die Erkenntnis zu Nutze, dass die oben beschriebene Ist-Position der höchsten Intensität aufgrund zu hoher Umgebungshelligkeit nicht mehr genau ermittelt werden kann.

In einer weiteren Ausgestaltung kann die Auswerteeinheit über einen entsprechenden Mustererkennungs-Algorithmus aus den Bilddaten eine Position der Fahrzeugfront (z.B. Motorhaube) extrahieren. Basierend auf dieser Information kann dann die Blickrichtung der Stereokamera SK bestimmt werden. Sollte diese Blickrichtung nicht mit der Richtung *̅K̅R̅*̅ der Fig. 1 korrelieren, kann dies geeignet bei der Auswertung der Bilder im Rahmen einer Korrektur berücksichtigt werden. Mit anderen Worten kann das Bezugssystem des Kraftfahrzeugs, für das die entsprechenden Strahlrichtungen *̅S̅R̅_̅{̅R̅}̅*̅ bzw. *̅S̅R̅_̅{̅L̅}̅*̅ festgelegt sind, in den Bilddaten identifiziert werden.

Die im Vorangegangenen beschriebenen Ausführungsformen des erfindungsgemäßen Verfahrens weisen eine Reihe von Vorteilen auf. Insbesondere kann die Überprüfung eines Scheinwerfers unter Verwendung von verschiedensten Projektionsflächen vorgenommen werden, ohne dass die Form, Ausrichtung bzw. Position der Projektionsfläche vorab bekannt sind. Dies wird dadurch ermöglicht, dass die Oberfläche der Projektionsfläche basierend auf einem 3D-Modell modelliert wird, welches basierend auf den Bilddaten einer Stereokamera bzw. einer anderen 3D-Kamera erzeugt wird. Das Verfahren arbeitet dabei sehr schnell und kann gegebenenfalls bei jeder Aktivierung des Scheinwerfers durchgeführt werden. Ferner kann das Kraftfahrzeug im Falle einer Verstellung des Scheinwerfers auch eine automatische Justierung vornehmen, sofern eine entsprechende Justiereinrichtung im Fahrzeug verbaut ist.

Vorstehend wurde das erfindungsgemäße Verfahren durch Komponenten in einem Kraftfahrzeug durchgeführt. Gegebenenfalls kann das Verfahren auch durch einen Rechner außerhalb des Kraftfahrzeugs ausgeführt werden, der die Stereokamera und die Scheinwerfer des Kraftfahrzeugs ansteuert und insbesondere die Bilddaten der Kamera ausliest und zur Überprüfung der Scheinwerfer verarbeitet. Mit anderen Worten ist es nicht unbedingt erforderlich, dass die Komponenten zur Durchführung des Verfahrens (mit Ausnahme der Bildaufnahmeeinrichtung) im Kraftfahrzeug vorgesehen sein müssen. Vielmehr kann z.B. eine Kraftfahrzeugwerkstatt über eine Einrichtung zur Überprüfung der Scheinwerfereinstellung gemäß dem erfindungsgemäßen Verfahren verfügen.

## Patentansprüche

1. Verfahren zum Überprüfen der Einstellung eines Scheinwerfers (2, 3) in einem Kraftfahrzeug (1), bei dem:
a) in einer vorgegebenen Grundposition des Scheinwerfers (2, 3) mittels einer Bildaufnahmeeinrichtung (SK) des Kraftfahrzeugs (1) eine auf den Scheinwerfer (2, 3) zuweisende Projektionsfläche (PF) zu einem oder mehreren Aufnahmezeitpunkten umfassend einen Aufnahmezeitpunkt mit aktiviertem Scheinwerfer (2, 3) erfasst wird, wodurch Bilddaten (PF) mit räumlichen Positionsinformationen erhalten werden, wobei die Bilddaten die Projektionsfläche (PF) enthalten;
b) aus den Bilddaten ein 3D-Modell der Projektionsfläche (PF) ermittelt wird, welches die Projektionsfläche (PF) in einem Bezugssystem des Kraftfahrzeugs (1) basierend auf einer Vielzahl von Positionen auf der Oberfläche der Projektionsfläche (PF) beschreibt;
c) aus den Bilddaten eine Ist-Position (P_{Li}, P_{Ri}) eines Lichtbereichs innerhalb der Lichtverteilung des Scheinwerfers (2, 3) auf der Projektionsfläche (PF) in dem Bezugssystem des Kraftfahrzeugs (1) identifiziert wird, wobei der Lichtbereich durch einen für die Grundposition vorgegebenen Strahlengang (*̅S̅R̅_̅{̅L̅}̅*̅, *̅S̅R̅_̅{̅R̅}̅*̅) im Licht des Scheinwerfers (2, 3) in dem Bezugssystem des Kraftfahrzeugs (1) charakterisiert ist;
d) basierend auf dem vorgegebenen Strahlengang (*̅S̅R̅_̅{̅L̅}̅*̅, *̅S̅R̅_̅{̅R̅}̅*̅) und dem 3D-Modell der Projektionsfläche (PF) eine Soll-Position (P_{Ls}, P_{Rs}) des Lichtbereichs innerhalb der Lichtverteilung des Scheinwerfers (2, 3) auf der Projektionsfläche (PF) in dem Bezugssystem des Kraftfahrzeugs (1) ermittelt wird;
e) eine Verstellung des Scheinwerfers (1, 2) festgestellt wird, falls die Abweichung zwischen der Ist-Position (P_{Li}, P_{Ri}) und der Soll-Position (P_{Ls}, P_{Rs}) des Lichtbereichs einen vorgegebenen Schwellwert überschreitet.

2. Verfahren nach Anspruch 1, **dadurch gekennzeichnet, dass** in Schritt a) die Projektionsfläche (PF) mit einer Bildaufnahmeeinrichtung (SK) in der Form einer 3D-Kamera, insbesondere einer Stereokamera und/oder einer TOF-Kamera, oder mit einer Bildaufnahmeeinrichtung eines Muster-Projektionssystems erfasst wird, dessen Lichtquelle vorzugsweise den Scheinwerfer (2, 3) umfasst.

3. Verfahren nach Anspruch 1 oder 2, **dadurch gekennzeichnet, dass** in die Projektionsfläche (PF) in Schritt a) zu einem einzelnen Aufnahmezeitpunkt bei aktiviertem Scheinwerfer (2, 3) erfasst wird.

4. Verfahren nach einem der vorhergehende Ansprüche, bei dem der Lichtbereich innerhalb der Lichtverteilung des Scheinwerfers (2, 3) der Ort mit der höchsten Lichtintensität ist.

5. Verfahren nach einem der vorhergehenden Ansprüche, **dadurch gekennzeichnet, dass** eine Warnmeldung ausgegeben wird, falls in Schritt e) eine Verstellung des Scheinwerfers (2, 3) festgestellt wird, wobei die Warnmeldung insbesondere eine durch das Kraftfahrzeug (1) ausgegebene Warnmeldung ist, welche durch den Fahrer des Kraftfahrzeugs wahrgenommen werden kann.

6. Verfahren nach einem der vorhergehenden Ansprüche, **dadurch gekennzeichnet, dass** das Kraftfahrzeug (1) eine automatische Justiereinrichtung (M1, M2, M3, M4) zur Justage der Position des Scheinwerfers (2, 3) im Kraftfahrzeug umfasst, wobei in einem Schritt f) die automatische Justiereinrichtung (M1, M2, M3, M4) die Position des Scheinwerfers (2, 3) um die Abweichung zwischen der Ist-Position (P_{Li}, P_{Ri}) und der Soll-Position (P_{Ls}, P_{Rs}) korrigiert, falls die Abweichung den vorgegebenen Schwellwert überschreitet.

7. Verfahren nach Anspruch 6, **dadurch gekennzeichnet, dass** nach der Korrektur der Position des Scheinwerfers (2, 3) um die Abweichung zwischen der Ist-Position (P_{Li}, P_{Ri}) und der Soll-Position (P_{Ls}, P_{Rs}) die korrigierte Position des Scheinwerfers (2, 3) als neue vorgegebene Grundposition im Kraftfahrzeug (1) gespeichert wird, wobei die Schritte a) bis f) vorzugsweise solange wiederholt werden, bis die Abweichung zwischen der Ist-Position (P_{Li}, P_{Ri}) und der Soll-Position (P_{Ls}, P_{Rs}) in Schritt e) kleiner oder kleiner gleich dem vorgegebenen Schwellwert ist.

8. Verfahren nach einem der vorhergehenden Ansprüche, **dadurch gekennzeichnet, dass** der Scheinwerfer (2, 3) zu dem oder den Aufnahmezeitpunkten aufblitzt.

9. Verfahren nach einem der vorhergehenden Ansprüche, **dadurch gekennzeichnet, dass** in Schritt b) ein Maß für die Genauigkeit des 3D-Modells ermittelt wird, wobei das Verfahren abgebrochen wird oder eine Warnmeldung ausgegeben wird, wenn das Maß für die Genauigkeit des 3D-Modells unterhalb einer vorbestimmten Schwelle liegt.

10. Verfahren nach einem der vorhergehenden Ansprüche, **dadurch gekennzeichnet, dass** aus den Bilddaten die Umgebungshelligkeit ermittelt wird, und das Verfahren abgebrochen wird oder eine Warnmeldung ausgegeben wird, wenn die Umgebungshelligkeit einen vorbestimmten Helligkeitswert überschreitet.

11. Verfahren nach einem der vorhergehenden Ansprüche, **dadurch gekennzeichnet, dass** aus den Bilddaten eine Position eines Bauteils des Kraftfahrzeugs (1) extrahiert wird und hierüber das Bezugssystem des Kraftfahrzeugs (1) in den Bilddaten identifiziert wird.

12. Verfahren nach einem der vorhergehenden Ansprüche, **dadurch gekennzeichnet, dass** mit dem Verfahren ein Frontscheinwerfer des Kraftfahrzeugs (1), insbesondere ein Abblendlichtscheinwerfer oder ein Fernlichtscheinwerfer oder ein Tagfahrlicht-Scheinwerfer oder ein Nebelscheinwerfer, überprüft wird.

13. Vorrichtung zum Überprüfen der Einstellung eines Scheinwerfers (2, 3) in einem Kraftfahrzeug (1), wobei die Vorrichtung eine Rechnereinrichtung umfasst, welche derart ausgestaltet sind, dass die Rechnereinrichtung in deren Betrieb:
a) eine Bildaufnahmeeinrichtung (SK) des Kraftfahrzeugs (1) anweist, in einer vorgegebenen Grundposition des Scheinwerfers (2, 3) eine auf den Scheinwerfer (2, 3) zuweisende Projektionsfläche (PF) zu einem oder mehreren Aufnahmezeitpunkten umfassend einen Aufnahmezeitpunkt mit aktiviertem Scheinwerfer (2, 3) zu erfassen, wodurch Bilddaten (PF) mit räumlichen Positionsinformationen erhalten werden, wobei die Bilddaten die Projektionsfläche (PF) enthalten;
b) aus den Bilddaten ein 3D-Modell der Projektionsfläche (PF) ermittelt, welches die Projektionsfläche (PF) in einem Bezugssystem des Kraftfahrzeugs (1) basierend auf einer Vielzahl von Positionen auf der Oberfläche der Projektionsfläche (PF) beschreibt;
c) aus den Bilddaten eine Ist-Position (P_{Li}, P_{Ri}) eines Lichtbereichs innerhalb der Lichtverteilung des Scheinwerfers (2, 3) auf der Projektionsfläche (PF) in dem Bezugssystem des Kraftfahrzeugs (1) identifiziert, wobei der Lichtbereich durch einen für die Grundposition vorgegebenen Strahlengang (*̅S̅R̅_̅{̅L̅}̅*̅, *̅S̅R̅_̅{̅R̅}̅*̅) im Licht des Scheinwerfers (2, 3) in dem Bezugssystem des Kraftfahrzeugs (1) charakterisiert ist;
d) basierend auf dem vorgegebenen Strahlengang (*̅S̅R̅_̅{̅L̅}̅*̅, *̅S̅R̅_̅{̅R̅}̅*̅) eine Soll-Position (P_{Ls}, P_{Rs}) des Lichtbereichs innerhalb der Lichtverteilung des Scheinwerfers (2, 3) auf der Projektionsfläche (PF) in dem Bezugssystem des Kraftfahrzeugs (1) ermittelt;
e) eine Verstellung des Scheinwerfers (1, 2) feststellt, falls die Abweichung zwischen der Ist-Position (P_{Li}, P_{Ri}) und der Soll-Position (P_{Ls}, P_{Rs}) des Lichtbereichs einen vorgegebenen Schwellwert überschreitet.

14. Vorrichtung nach Anspruch 13, **dadurch gekennzeichnet, dass** die Vorrichtung zur Durchführung eines Verfahrens nach einem der Ansprüche 2 bis 12 eingerichtet ist.

15. Kraftfahrzeug, umfassend eine Vorrichtung nach Anspruch 13 oder 14 zur Überprüfung eines Scheinwerfers des Kraftfahrzeugs (1).

## Claims

1. A method for checking the setting of a headlight (2, 3) in a motor vehicle (1), in which:
a) in a specified basic position of the headlight (2, 3) a projected area (PF) facing towards the headlight (2, 3) is detected by means of an image recording means (SK) of the motor vehicle (1) at one or more recording times comprising a recording time with activated headlight (2, 3), as a result of which image data (PF) with spatial position information are obtained, wherein the image data include the projected area (PF);
b) from the image data a 3D model of the projected area (PF) which describes the projected area (PF) in a reference system of the motor vehicle (1) based on a large number of positions on the surface of the projected area (PF) is established;
c) from the image data an actual position (P_{Li}, P_{Ri}) of an area of light within the light distribution of the headlight (2, 3) on the projected area (PF) is identified in the reference system of the motor vehicle (1), wherein the area of light is **characterised by** a beam path (*̅S̅R̅_̅{̅L̅}̅*̅, *̅S̅R̅_̅{̅R̅}̅*̅) specified for the basic position in the light of the headlight (2, 3) in the reference system of the motor vehicle (1);
d) based on the specified beam path (*̅S̅R̅_̅{̅L̅}̅*̅, *̅S̅R̅_̅{̅R̅}̅*̅) and the 3D model of the projected area (PF), a desired position (P_{Ls}, P_{Rs}) of the area of light within the light distribution of the headlight (2, 3) on the projected area (PF) is established in the reference system of the motor vehicle (1);
e) a misalignment of the headlight (1, 2) is ascertained if the deviation between the actual position (P_{Li}, P_{Ri}) and the desired position (P_{Ls}, P_{Rs}) of the area of light exceeds a specified threshold value.

2. A method according to Claim 1, **characterised in that** in step a) the projected area (PF) is detected with an image recording means (SK) in the form of a 3D camera, especially a stereo camera and/or a ToF camera, or with an image recording means of a pattern projection system, the light source of which preferably comprises the headlight (2, 3).

3. A method according to Claim 1 or Claim 2, **characterised in that** detection is carried out into the projected area (PF) in step a) at an individual recording time when the headlight (2, 3) is activated.

4. A method according to one of the preceding claims, in which the area of light within the light distribution of the headlight (2, 3) is the place with the greatest light intensity.

5. A method according to one of the preceding claims, **characterised in that** a warning message is issued if in step e) misalignment of the headlight (2, 3) is ascertained, the warning message being especially a warning message issued by the motor vehicle (1) which can be perceived by the driver of the motor vehicle.

6. A method according to one of the preceding claims, **characterised in that** the motor vehicle (1) comprises an automatic adjustment means (M1, M2, M3, M4) for adjusting the position of the headlight (2, 3) in the motor vehicle, wherein in a step f) the automatic adjustment means (M1, M2, M3, M4) corrects the position of the headlight (2, 3) by the deviation between the actual position (P_{Li}, P_{Ri}) and the desired position (P_{Ls}, P_{Rs}) if the deviation exceeds the specified threshold value.

7. A method according to Claim 6, **characterised in that** after the correction of the position of the headlight (2, 3) by the deviation between the actual position (P_{Li}, P_{Ri}) and the desired position (P_{Ls}, P_{Rs}) the corrected position of the headlight (2, 3) is stored in the motor vehicle (1) as a new specified basic position, with steps a) to f) preferably being repeated until the deviation between the actual position (P_{Li}, P_{Ri}) and the desired position (P_{Ls}, P_{Rs}) in step e) is less than or less than or equal to the specified threshold value.

8. A method according to one of the preceding claims, **characterised in that** the headlight (2, 3) flashes at the recording time or times.

9. A method according to one of the preceding claims, **characterised in that** in step b) a measurement for the accuracy of the 3D model is established, the method being discontinued or a warning message being issued if the measurement for the accuracy of the 3D model lies beneath a predetermined threshold.

10. A method according to one of the preceding claims, **characterised in that** the ambient luminosity is established from the image data, and the method is discontinued or a warning message is issued if the ambient luminosity exceeds a predetermined brightness value.

11. A method according to one of the preceding claims, **characterised in that** a position of a component of the motor vehicle (1) is extracted from the image data and the reference system of the motor vehicle (1) in the image data is identified by means of this.

12. A method according to one of the preceding claims, **characterised in that** a front headlight of the motor vehicle (1), especially a dipped-beam headlight or a main-beam headlight or a daytime running light or a fog lamp, is checked using the method.

13. A device for checking the setting of a headlight (2, 3) in a motor vehicle (1), wherein the device comprises a computer means which is configured such that the computer means in its operation:
a) instructs an image recording means (SK) of the motor vehicle (1) in a specified basic position of the headlight (2, 3) to detect a projected area (PF) facing towards the headlight (2, 3) at one or more recording times comprising a recording time with activated headlight (2, 3), as a result of which image data (PF) with spatial position information are obtained, wherein the image data contain the projected area (PF);
b) from the image data establishes a 3D model of the projected area (PF) which describes the projected area (PF) in a reference system of the motor vehicle (1) based on a large number of positions on the surface of the projected area (PF);
c) from the image data identifies an actual position (P_{Li}, P_{Ri}) of a light zone within the light distribution of the headlight (2, 3) on the projected area (PF) in the reference system of the motor vehicle (1), wherein the area of light is **characterised by** a beam path (*̅S̅R̅_̅{̅L̅}̅*̅, *̅S̅R̅_̅{̅R̅}̅*̅) specified for the basic position in the light of the headlight (2, 3) in the reference system of the motor vehicle (1);
d) based on the specified beam path (*̅S̅R̅_̅{̅L̅}̅*̅, *̅S̅R̅_̅{̅R̅}̅*̅) establishes a desired position (P_{Ls}, P_{Rs}) of the area of light within the light distribution of the headlight (2, 3) on the projected area (PF) in the reference system of the motor vehicle (1);
e) ascertains a misalignment of the headlight (1, 2) if the deviation between the actual position (P_{Li}, P_{Ri}) and the desired position (P_{Ls}, P_{Rs}) of the area of light exceeds a specified threshold value.

14. A device according to Claim 13, **characterised in that** the device is set up to carry out a method according to one of Claims 2 to 12.

15. A motor vehicle, comprising a device according to Claim 13 or Claim 14 for checking a headlight of the motor vehicle (1).

## Revendications

1. Procédé de contrôle du réglage d'un phare (2, 3) d'un véhicule (1) selon lequel :
a) dans une position de base prédéfinie du phare (2, 3) on détecte au moyen d'un dispositif de prise d'image (SK) du véhicule (1) une surface de projection (PF) située en regard du phare (2, 3) à un ou plusieurs temps de prise comprenant un temps de prise avec un phare (2, 3) activé, des données d'image (PF) avec des informations de position spatiale étant ainsi obtenues, les données d'image comprenant la surface de projection (PF),
b) à partir des données d'image on détermine un modèle 3D de la surface de projection (PF) qui décrit la surface de projection (PF) dans un système de référence du véhicule (1) basé sur une série de positions sur la surface de la surface de projection (PF),
c) à partir de données d'image on identifie la position réelle (P_{Li}, P_{Ri}) d'une zone de lumière dans la distribution de la lumière du phare (2, 3) sur la surface de projection (PF) dans le système de référence du véhicule (1), la zone de lumière étant **caractérisée par** le trajet du rayonnement (*̅S̅R̅_̅{̅L̅}̅*̅, *̅S̅R̅_̅{̅R̅}̅*̅) prédéfini pour la position de base de la lumière du phare (2, 3) dans le système de référence du véhicule,
d) à partir du trajet du rayonnement (*̅S̅R̅_̅{̅L̅}̅*̅, *̅S̅R̅_̅{̅R̅}̅*̅) prédéfini et du modèle 3D de la surface de projection (PF), on détermine la position de consigne (P_{LS}, P_{RS}) de la zone de la lumière dans la distribution de la lumière du phare (2, 3) sur la surface de la projection (PF) dans le système de référence du véhicule (1),
e) on détermine un déplacement du phare (1, 2) lorsque l'écart entre la position réelle (P_{Li}, P_{Ri}) et la position de consigne (P_{LS}, P_{RS}) de la zone de lumière dépasse une valeur de consigne prédéfinie.

2. Procédé conforme à la revendication 1,
**caractérisé en ce que**
lors de l'étape a) la surface de projection (PF) est détectée avec un dispositif de prise d'image (SK) sous la forme d'une caméra 3D en particulier d'une stéréo caméra et/ou d'une caméra TOF ou avec un dispositif de prise d'image d'un système de projection modèle dont la source de lumière comporte de préférence le phare (2, 3).

3. Procédé conforme à la revendication 1 ou 2,
**caractérisé en ce que**
lors de l'étape a) on effectue la détection dans la surface de projection (PF) à un seul temps de prise lorsque le phare (2, 3) est activé.

4. Procédé conforme à l'une des revendications précédentes,
selon lequel la zone de lumière dans la distribution de la lumière du phare (2, 3) est le lieu ayant l'intensité lumineuse la plus élevée.

5. Procédé conforme à l'une des revendications précédentes,
**caractérisé en ce qu'**
un avertissement est délivré lorsque, lors de l'étape e) un déplacement du phare (2, 3) est déterminé, l'avertissement étant en particulier un avertissement délivré par le véhicule (1) qui peut être perçu par le conducteur du véhicule.

6. Procédé conforme à l'une des revendications précédentes,
**caractérisé en ce que**
le véhicule (1) comporte un dispositif d'ajustement automatique (M1, M2, M3, M4) permettant d'ajuster la position du phare (2, 3) dans le véhicule, et, lors d'une étape f) le dispositif d'ajustement automatique (M1, M2, M3, M4) corrige la position du phare (2, 3) de l'écart entre la position réelle (P_{Li}, P_{Ri}) et la position de consigne (P_{LS}, P_{RS}) lorsque l'écart dépasse la valeur de seuil prédéfinie.

7. Procédé conforme à la revendication 6,
**caractérisé en ce qu'**
après la correction de la position du phare (2, 3) de l'écart entre la position réelle (P_{Li}, P_{Ri}) et la position de consigne (P_{LS}, P_{RS}), la position corrigée du phare (2, 3) est enregistrée en tant que nouvelle position de base prédéfinie dans le véhicule (1) et les étapes a) à f) sont de préférence réitérées jusqu'à ce que l'écart entre la position réelle (P_{Li}, P_{Ri}) et la position de consigne (P_{LS}, P_{RS}) lors de l'étape e) soit inférieur ou égal à la valeur de seuil prédéfinie.

8. Procédé conforme à l'une des revendications précédentes,
**caractérisé en ce que**
le phare (2, 3) flashe à(aux) temps de prise.

9. Procédé conforme à l'une des revendications précédentes,
**caractérisé en ce que**
lors de l'étape b) une mesure de la précision du modèle 3D est déterminée et le procédé est interrompu ou un avertissement est délivré lorsque la mesure de la pression du modèle 3D est située au-dessous d'un seuil déterminé.

10. Procédé conforme à l'une des revendications précédentes,
**caractérisé en ce qu'**
à partir des données d'image on détermine la clarté de l'environnement et le procédé est interrompu ou un avertissement est délivrée lorsque la clarté de l'environnement dépasse une valeur de clarté prédéfinie.

11. Procédé conforme à l'une des revendications précédentes,
**caractérisé en ce qu'**
on extrait la position d'un élément du véhicule (1) des données d'image et, le système de référence du véhicule (1) est ainsi identifié dans les données d'image.

12. Procédé conforme à l'une des revendications précédentes,
**caractérisé en ce que**
lors de la mise en oeuvre de procédé, on contrôle un phare avant du véhicule (1), en particulier un code ou un feu de position ou un feu de route ou un phare antibrouillard.

13. Dispositif permettant de contrôler le réglage d'un phare (2, 3) d'un véhicule (1), ce dispositif comprenant un dispositif de calcul qui est réalisé de sorte que, lors de son fonctionnement, le dispositif de calcul :
a) ordonne à un dispositif de prise d'image (SK) du véhicule (1), de détecter dans une position de base prédéfinie du phare (2, 3) une surface de projection (PF) située en regard du phare (2, 3) à un ou plusieurs temps de prise comprenant un temps de prise pour lequel le phare (2, 3) est activé, des données d'image (PF) avec des informations de position spatiale étant ainsi obtenues, les données d'image renfermant la surface de projection (PF),
b) détermine à partir des données d'images, un modèle 3D de la surface de projection (PF) qui décrit la surface de projection (PF) dans un système de référence du véhicule (1) basé sur une série de positions sur la surface de la surface de projection (PF),
c) identifie à partir des données d'image la position réelle (P_{Li}, P_{Ri}) d'une zone de lumière dans la distribution de la lumière du phare (2, 3) sur la surface de projection (PF) dans le système de référence du véhicule (1), la zone de la lumière étant **caractérisée par** le trajet du rayonnement (*̅S̅R̅_̅{̅L̅}̅*̅, *̅S̅R̅_̅{̅R̅}̅*̅) prédéfini pour la position de base de la lumière du phare (2, 3) dans le système de référence du véhicule
d) détermine sur le fondement du trajet du rayonnement (*̅S̅R̅_̅{̅L̅}̅*̅, *̅S̅R̅_̅{̅R̅}̅*̅) prédéfini, une position de consigne (P_{LS}, P_{RS}) de la zone de lumière dans la distribution de la lumière du phare (2, 3) sur la surface de projection (PF) dans le système de référence du véhicule (1),
e) détermine un déplacement du phare (1, 2) lorsque l'écart entre la position réelle (P_{Li}, P_{Ri}) et la position de consigne (P_{LS}, P_{RS}) de la zone de lumière dépasse une valeur de seuil prédéfinie.

14. Dispositif conforme à la revendication 13,
**caractérisé en ce qu'**
il est adapté à la mise en oeuvre d'un procédé conforme à l'une des revendications 2 à 12.

15. Véhicule comprenant un dispositif conforme à la revendication 13 ou 14, pour permettre de contrôler un phare du véhicule (1).
